# EUROPÄISCHE PATENTSCHRIFT

(11) **EP 0 590 659 B1**
(45) Veröffentlichungstag und Bekanntmachung des Hinweises auf die Patenterteilung: **12.04.1995**
(21) Anmeldenummer: 93115793.7
(22) Anmeldetag: 30.09.1993
(51) Int. Cl.: C08L 51/06

(54) **Verfahren zur Herstellung von Vinylchlorid-Polymerisats-Massen mit stufenlos einstellbaren Stoffeigenschaften**
Process for producing vinylchloride polymer compositions having infinitely variable properties
Procédé pour la production de compositions de polymères de chlorure de vinyle ayant de caractéristiques continuellement variables

(30) Priorität: 01.10.1992 DE 4233052
(43) Veröffentlichungstag der Anmeldung: 06.04.1994
(73) Patentinhaber: Wacker-Chemie GmbH, 81737 München (DE)
(72) Erfinder: Büppelmann, Klaus, Dr., D-84489 Burghausen (DE); Weber, Karl, D-84579 Unterneukirchen (DE); Lindlbauer, Franz, A-4962 Mining (AT)

(56) Entgegenhaltungen:
- EP-A- 0 224 913
- EP-A- 0 502 560
- FR-A- 2 319 665
- DATABASE WPI Section Ch, Week 9201, 14. November 1991 Derwent Publications Ltd., London, GB; Class A14, AN 92-002697 & JP-A-3 255 135 (TOKUYAMA SEKISUI KK)

## Beschreibung

Die Erfindung betrifft ein Verfahren zur Herstellung von Vinylchlorid-Polymerisat-Massen mit stufenlos einstellbaren Stoffeigenschaften durch Abmischen von Vinylchlorid-Pfropfcopolymerisat-Granulat hoher Shore-Härte mit Vinylchlorid-Pfropfcopolymerisat-Granulat niederer Shore-Härte und anschließender thermoplastischer Verarbeitung der Granulat-Mischung.

Die Stoffeigenschaften, beispielsweise Shore-Härte oder davon abhängige Größen wie Compression-Set, Reißfestigkeit, Reißdehnung von Polyvinylchloridmassen werden gewöhnlich durch gezieltes Abmischen von Polyvinylchloridpulver mit Zusatzstoffen, beispielsweise mit Weichmacher, hergestellt. Dabei muß für jede gewünschte Eigenschaft und unterschiedliche Anforderung an das Fertigteil eine separate Mischung durch Auswahl des geeigneten VC-Polymerisats, beispielsweise hartes Polymer, weiches Polymer, Copolymere, Blockcopolymere Polymerblends bestimmter Zusammensetzung, und der geeigneten Mischungskomponente, beispielsweise Weichmacher oder weitere Zusatzstoffe wie Füllstoffe, Stabilisatoren, in den unterschiedlichsten Mischungsverhältnissen hergestellt werden. Das hat zur Folge, daß die Bereitstellung von Mischungen verschiedenster Eigenschaften und damit unterschiedlicher Zusammensetzung die Lagerkapazität und Logistik beim Verarbeiter erheblich belastet.

Ein weiteres Problem, vor allem bei der Herstellung von Polyvinylchlorid-Formmassen mit niederer Shore-Härte, besteht darin, daß erhebliche Mengen an Weichmacher zugesetzt werden müssen, was bei den Formmassen oft das Problem der Weichmachermigration aufwirft. Mit solchen Mischungen sind daher keine Formmassen mit sehr geringer Shore-Härte zugänglich. Darüberhinaus ist es nicht möglich die Eigenschaften, wie Shore-Härte, derartiger Mischungen durch weitere Zugabe von Weichmacher bzw. PVC-Pulver nachträglich zu modifizieren, da wegen der mangelnden Dispergierbarkeit der Weich-PVC-Mischung mit den Mischungskomponenten Weichmacher bzw. VC-Polymerisat mit herkömmlichen Dispergiertechniken keine homogene Mischung herstellbar ist.

In der EP-A 358 179 (US-A 4,983,665) werden Mischungen beschrieben, welche Vinylchloridpfropfcopolymerisate auf der Basis einer Ethylencopolymer-Pfropfgrundlage sowie kautschukartige Copolymere oder Weichmacher enthalten. Die EP-A 358 181 betrifft Gemische aus Vinylchlorid-Acrylat-Copolymerisaten, Weichmacher und/oder einem weichem Modifierharz. Mit den in diesen Publikationen genannten Methoden sind Polyvinylchlorid-Harzmassen zugänglich, deren Shore-Härte über einen weiten Bereich einstellbar ist und die auch bei niederer Shore-Härte nur geringe Weichmachermigration zeigen. Nachteilig ist jedoch, daß auch hier für jeden Shore-Härte-Wert eine separate Rezeptur, für VC-(Pfropf)Copolymer, Weichmacher, Modifier, Stabilisator, Füllstoff, zur Abmischung der Komponenten der PVC-Harzmasse eingehalten werden muß. Dies bedeutet für den Anwender separate Aufbereitungskampagnen mit entsprechenden Stillstandszeiten für Reinigung und Umstellung sowie eine daraus resultierende größere Lagerhaltung.

Es bestand daher die Aufgabe ein Verfahren zur Verfügung zu stellen, mit dem sich Vinylchloridpolymerisat-Massen mit über einen weiten Bereich stufenlos einstellbaren Stoffeigenschaften, innerhalb der durch die Grundkomponenten vorgegebenen Grenzen, herstellen lassen, wobei die Herstellung mit möglichst wenigen Grundkomponenten ermöglicht werden sollte.

Gegenstand der Erfindung ist ein Verfahren zur Herstellung von Vinylchlorid-Polymerisat-Massen mit stufenlos einstellbaren Stoffeigenschaften durch Abmischen von 0,5 bis 99,5 Gew% weichmacherfreiem oder nur geringe Anteile Weichmacher enthaltendem Vinylchlorid-Pfropfcopolymerisat-Granulat hoher Shore-Härte A mit 99,5 bis 0,5 Gew% weichmacherhaltigem Vinylchlorid-Pfropfcopolymerisat-Granulat niederer Shore-Härte A, jeweils bezogen auf das Gesamtgewicht der Granulat-Mischung, und anschließender thermoplastischer Verarbeitung der Granulatmischungen, wobei
a) das weichmacherfreie oder nur geringe Anteile Weichmacher enthaltende Vinylchlorid-Pfropfcopolymerisat-Granulat ein elastomerhaltiges Vinylchlorid-Pfropfcopolymerisat und 0 bis 10 Gew% Weichmacher, bezogen auf das Gesamtgewicht des Granulats, enthält und die Shore-Härte A des Granulats 60 bis 95 beträgt, und
b) das weichmacherhaltige Vinylchlorid-Pfropfcopolymerisat-Granulat ein elastomerhaltiges Vinylchlorid-Pfropfcopolymerisat und 1 bis 50 Gew% Weichmacher, bezogen auf das Gesamtgewicht des Granulats, enthält und die Shore-Härte A des Granulats 15 bis 60 beträgt.

Die Extrembereiche der einstellbaren Stoffeigenschaften erhält man durch die alleinige Verwendung von Mischungskomponente a) oder b). Im Gemisch werden die Grundkomponenten a) und b) in einer Menge von 0.5 bis 99.5 Gew%, bezogen auf das Gesamtgewicht der Granulatmischung, eingesetzt, da bei Anteilen kleiner 0.5 Gew% eine nennenswerte Beeinflußung der Stoffeigenschaften nicht mehr feststellbar ist.

Die Shore-Härte Shore A des weichmacherfreien bzw. nur geringe Anteile an Weichmacher enthaltenden, harten VC-Pfropfcopolymer-Granulats a) beträgt 60 bis 95, vorzugsweise 70 bis 85. Die Shore-Härte Shore A des weichmacherhaltigen, weichen VC-Pfropfcopolymer-Granulats b) beträgt 15 bis 60, vorzugsweise von 30 bis 40.

Als elastomerhaltige Vinylchlorid-Pfropfcopolymerisate geeignet sind solche, bei denen Vinylchlorid oder Gemische von Vinylchlorid mit Vinylmonomeren, deren Homopolymere Glasübergangstemperaturen ≧ 50°C aufweisen, beispielsweise Methylacrylat, Methylmethacrylat, Styrol und Vinylacetat, auf die elastomere Phase aufgepfropft sind. Als elastomere Pfropfgrundlage geeignet sind Homo- und Copolymerisate von Butadien, Isopren, Acrylnitril, Styrol, Ethylen, Vinylester und/oder C₁- bis C₈-Alkylestern der Acrylsäure oder Gemische der genannten Homo- und Copolymerisate.

Bevorzugte Vinylchlorid-Pfropfcopolymerisate sind solche auf der Basis von Ethylen-Vinylester-Copolymerisaten, welche gegebenenfalls noch weitere funktionelle oder vernetzend wirkende Comonomere enthalten oder solche auf der Basis von Homo- oder Copolymerisaten der C₁- bis C₈-Alkylester der (Meth)acrylsäure, welche gegebenenfalls noch vernetzend wirkende Comonomere enthalten. Besonders bevorzugt sind Pfropfcopolymerisate mit einem Vinylchlorid-Anteil von 30 bis 95 Gew%, bezogen auf das Gesamtgewicht des Pfropfcopolymerisats, und einer Ethylen-Vinylacetat-Pfropfgrundlage, deren Ethylengehalt 30 bis 65 Gew%, bezogen auf das Gesamtgewicht der Pfropfgrundlage, beträgt oder einer, gegebenenfalls vernetzten, Polybutylacrylat-Pfropfgrundlage.

Die in dem erfindungsgemäßen Verfahren verwendeten Pfropfcopolymere können nach den dem Fachmann geläufigen Verfahren, wie Masse-, Lösungs-, Suspensions- oder Emulsionspolymerisation, hergestellt werden, die daher keiner näheren Erläuterung bedürfen. Vorzugsweise erfolgt die Herstellung nach dem Emulsions- oder Suspensionspolymerisationsverfahren.

Die Pfropfcopolymerisation wird dabei durch die üblichen öl- bzw. wasserlöslichen peroxidischen Initiatoren oder Azoverbindungen, in einer Menge von 0.01 bis 5 Gew%, bezogen auf Monomere, initiiert. Gegebenenfalls können auch Redoxsysteme eingesetzt werden. Im allgemeinen wird die Polymerisation bei 0 bis 80°C durchgeführt. Zur Stabilisierung des Polymerisationsansatzes können je nach dem gewählten Verfahren Schutzkolloide und/oder Emulgatoren eingesetzt werden. Geeignete Schutzkolloide sind zum Beispiel Celluloseether und/oder Polyvinylalkohole. Als Emulgatoren können sowohl ionische, wie etwa Alkylsulfate oder Alkylsulfonate, als auch nichtionische Emulgatoren, wie Teilfettalkoholether oder Teilfettsäureester mehrwertiger Alkohole eingesetzt werden. Zur Einstellung des Molekulargewichts bzw. K-Werts können dem Polymerisationsansatz Regler zugegeben werden. Beispiele hierfür sind Chlorkohlenwasserstoffe wie Trichlorethylen.

Die Polymerisation kann diskontinuierlich oder kontinuierlich, unter Verwendung von Saatlatices und Vorlage aller oder einzelner Bestandteile des Reaktionsgemisches, oder unter teilweiser Vorlage und Nachdosierung der oder einzelner Bestandteile des Reaktionsgemisches, durchgeführt werden. Der Polymerisationsansatz wird in üblicher Art und Weise aufgearbeitet. Zum Beispiel können die entstehenden Suspensionen oder Latices in bekannter Weise entgast werden und anschließend durch Filtration, Koagulation, Walzen- oder Sprühtrocknung aufgearbeitet werden.

Verfahren zur Herstellung der vorzugsweise einzusetzenden VC-Pfropfcopolymerisate auf der Basis von Ethylen-Vinylacetat-Copolymer oder Polybutylacrylat sind beispielsweise in der DE-OS 37 43 142 und der DE-OS 38 03 036 beschrieben.

Zur Herstellung der weichmacherhaltigen Granulate wird das VC-Pfropfcopolymerisat in bekannter Weise mit Weichmacher gemischt. Das Vinylchlorid-Propfcopolymerisat-Granulat a) mit hoher Shore-Härte enthält keinen Weichmacher oder 1 bis 10 Gew% Weichmacher, bezogen auf das Gesamtgewicht des Granulats. Vorzugsweise enthält das harte Granulat a) keinen Weichmacher. Die vorzugsweise einzusetzende Menge an Weichmacher im VC-Pfropfcopolymerisat-Granulat b) mit niederer Shore-Härte hängt von der gewünschten Shore-Härte des Granulats b) ab und liegt dabei üblicherweise zwischen 20 und 30 Gew%, bezogen auf das Gesamtgewicht des Granulats.

Geeignete Weichmacher sind beispielsweise die in der PVC-Verarbeitung üblicherweise verwendeten Diester der Phthalsäure, Sebazinsäure oder Adipinsäure oder Phosphorsäureester. Bevorzugte Weichmacher sind Alkylsulfonsäureester von Phenol oder Kresol; Phthalsäureester, zum Beispiel Dioctylphthalat, Di-n-decyl-phthalat, Di-iso-decyl-phthalat, Dicyclohexylphthalat, Phthalsäurepolyester; Adipinsäure- oder Sebacinsäureester, wie Di-2-ethylhexyladipat, Diisononyladipat, Adipinsäurepolyester; Phosphorsäureester, wie Diphenyl-2-ethylhexylphosphat, Tri-2-ethylhexylphosphat, Triphenylphosphat und Trimellitsäureester.

Die erfindungsgemäßen weichmacherfreien bzw. weichmacherhaltigen VC-Pfropfcopolymerisat-Granulate werden, wie in der PVC-Technologie üblich, mit Zusatzstoffen, wie beispielsweise Stabilisatoren, Gleitmitteln, Füllstoffen und/oder Pigmenten rezeptiert.

Zur Verwendung als Wärme- und Lichtstabilisatoren eignen sich die herkömmlichen Stabilisatorsysteme wie beispielsweise Organozinnstabilisatoren, Barium/Cadmium-Stabilisatoren, Bleistabilisatoren, Kombinationen von Blei- mit Ba/Cd-Stabilisatoren, Barium/Zink-Stabilisatoren sowie Calcium/Zink-Stabilisatoren. Besonders vorteilhaft ist die Verwendung von Ca/Zn-Stabilisatoren. Die Stabilisatoren werden in üblichen Mengen von vorzugsweise 1.0 bis 5.0 Gew%, bezogen auf das VC-Pfropfcopolymerisat, den Granulaten zugegeben.

Geeignete Gleitmittel sind beispielsweise Metallseifen (Ca- und Zn-Seifen), höhere Fettalkohole, Fettsäureglycerinester, Paraffine, Polyethylene und synthetische Wachse. Das Gleitmittel oder ein Gemisch von verschiedenen Gleitmitteln wird dem Granulat vorzugsweise in Mengen von 0.5 bis 2.5 Gew%, bezogen auf das VC-Pfropfcopolymerisat, zugegeben.

Falls erforderlich, können die VC-Pfropfcopolymerisat-Granulate noch Füllstoffe, beispielsweise Kreide, Quarzmehl, Talkum, oder Pigmente, beispielsweise Titandioxid oder Ruß, enthalten. Füllstoffe oder Pigmente werden dabei vorzugsweise in Mengen von 5 bis 100 Gew%, bezogen auf das VC-Pfropfcopolymerisat, eingesetzt.

Die im erfindungsgemäßen Verfahren zu verwendenden weichmacherfreien oder nur geringe Weichmacheranteile enthaltenden, harten bzw. weichmacherhaltigen, weichen VC-Pfropfcopolymerisat-Granulate können, nach in der PVC-Technologie üblichen Verfahren, durch Mischen der Komponenten bei erhöhter Temperatur, üblicherweise bis etwa 120°C, beispielsweise in schnellaufenden Innenmischern, in Fluidmischern, in Zweiwalzenmischern, in Banbury-Mischern oder in Strangpressen mit temperaturgeregelten Zylindern und/oder Schnecken und anschließender Granulierung, beispielsweise durch Heißgranulierung in einem Extruder oder durch Kaltgranulierung in Band- oder Stranggranulatoren, hergestellt werden. Vorzugsweise werden Mischen und Granulieren in einem Schritt durchgeführt, beispielsweise in einem Granulierextruder mit Pulvermischteilen. Vorzugsweise werden im erfindungsgemäßen Verfahren Granulate insbesonders mit einer Korngröße von 1.0 bis 10.0 mm eingesetzt. Das erfindungsgemäße Verfahren soll jedoch nicht auf die Verwendung der harten bzw. weichen VC-Pfropfcopolymerisate in Form deren Granulate eingeschränkt sein. Die VC-Pfropfcopolymerisate können auch in Form von feinteiligen Pulvern im erfindungsgemäßen Verfahren eingesetzt werden. In der Praxis hat sich jedoch, wegen der problemloseren Handhabbarkeit, die Verarbeitung von VC-Pfropfcopolymerisaten in Form von Granulaten durchgesetzt.

In der erfindungsgemäßen Verfahrensweise wird hartes VC-Pfropfcopolymerisat-Granulat mit einer, je nach Bedarf auf einen bestimmten Wert eingestellten, hohen Shore-Härte A mit weichem, weichmacherhaltigem VC-Pfropfcopolymerisat-Granulat mit einer, je nach Bedarf eingestellten, niederen Shore-Härte A in einem solchen Mengenverhältnis miteinander vermischt, daß als Produkt eine Mischung resultiert, die nach deren thermoplastischer Verarbeitung eine Formmasse mit vorausdefinierten Eigenschaften, beispielsweise Shore-Härte A, ergibt. Die Mischung der VC-Pfropfcopolymerisat-Granulate kann in beliebiger Art und Weise erfolgen, beispielsweise in einfachen Mischaggregaten wie Trommelmischern (Betonmischer).

Die fertigen Granulat-Mischungen werden mit den in der PVC-Technologie gebräuchlichen thermoplastischen Verarbeitungstechnologien weiterverarbeitet. Sie eignen sich beispielsweise für die Extrusion von Rohren oder Profilen, für die Kalandrierung von Folien oder für den Spritzguß von Formkörpern. Die direkte Dosierung der Granulate im gewünschten Mischungsverhältnis in die Verarbeitungsmaschine zur Extrusion, für die Kalandrierung oder für den Spritzguß ist ebenfalls möglich.

Mit der erfindungsgemäßen Verfahrensweise sind für den Verarbeiter, ausgehend von nur zwei Basisgranulaten mit hoher bzw. niederer Shore-Härte A, je nach Mischungsverhältnis VC-Polymerisat-Harzmassen mit stufenlos einstellbaren Stoffeigenschaften (beispielsweise Shore-Härte A), innerhalb der durch die Grundkomponenten vorgegebenen Extremwerte, zugänglich. Wird beispielsweise von einem Granulat a) mit einer Shore-Härte A von 84 und einem Granulat b) mit einer Shore-Härte A von 37 ausgegangen, erhält man bei einem Mischungsverhältnis von 9 : 1 eine PVC-Harzmasse mit einer Shore-Härte A von 80; bei einem Mischungsverhältnis von 8 : 2 resultiert ein Shore A-Wert von 72, bei 6 : 4 ein Shore A-Wert von 63 und bei 5 : 5 ein Shore A-Wert von 56.

Dies ist eine im Vergleich zum Stand der Technik, in dem für jede Mischung mit bestimmter Stoffeigenschaft ein eigenes Gemisch mit einer speziellen Rezeptur aus PVC-Pulver, Weichmacher und/oder Modifierharz, Stabilisator, Gleitmittel und Füllstoff abzumischen und dann zu verarbeiten war, wesentliche Verfahrenserleichterung.

Die nachfolgenden Beispiele dienen zur weiteren Erläuterung der Erfindung.

### Beispiel 1:

### a) Herstellung des Hartgranulats:

Es wurde ein Hartgranulat der nachfolgenden Rezeptur hergestellt:
80.4 Gew% Ethylen/Vinylacetat-Vinylchlorid-Pfropfcopolymer
4.0 Gew% Ca/Zn-Stabilisator
0.4 Gew% Phosphit-Chelator
0.8 Gew% epoxidiertes Sojabohnenöl
1.0 Gew% Gleitmittel
0.5 Gew% UV-Stabilisator
4.0 Gew% Wärmestabilisator
0.9 Gew% Verarbeitungshilfe
8.0 Gew% Kreide
Dazu wurden die festen Bestandteile der Rezeptur in einem Heizmischer bis zu einer Mischguttemperatur von 80°C gemischt. Bei 80°C wurden die festen Bestandteile der Rezeptur zugegeben und das Mischgut bis zum Erreichen von 110°C gemischt. Anschließend wurde das Mischgut auf 40°C gekühlt und mit einem Einschneckenextruder mit luftgekühltem Granulierkopf granuliert.

### b) Herstellung des Weichgranulats:

Es wurde ein Weichgranulat der nachfolgenden Rezeptur hergestellt:
57.4 Gew% Ethylen/Vinylacetat-Vinylchlorid-Pfropfcopolymer
2.8 Gew% Ca/Zn-Stabilisator
0.3 Gew% Phosphit-Chelator
0.6 Gew% epoxidiertes Sojabohnenöl
0.8 Gew% Gleitmittel
0.3 Gew% UV-Stabilisator
2.8 Gew% Wärmestabilisator
0.6 Gew% Verarbeitungshilfe
5.7 Gew% Kreide
28.7 Gew% Di-iso-decyl-phthalat
Das Mischen und Granulieren erfolgte dabei analog der Herstellung des Hartgranulats.

### Herstellung und Testung der PVC-Harzmassen:

Die Hart- und Weichgranulate wurden in den in Tabelle 1 angegebenen Gewichtsverhältnissen mit einem einfachen Mischaggregat (Betonmischer) kurz gemischt. Die Prüfkörper wurden aus den Gemischen durch 5-minütiges Walzen bei 160°C und anschließendem 10-minütigen Pressen bei 170°C hergestellt. An diesen Prüfkörpern wurden die Shore-Härte nach DIN 53505, die Reißfestigkeit und Reißdehnung nach DIN 53504 und der Druckverformungsrest bei 23°C nach DIN 53517 gemessen. Die Meßergebnisse sind in Tabelle 1 zusammengefaßt.

**TABELLE 1**

| Hart-/Weichgranulat(Gew%) | Shore A | Reißfestigkeit(N/mm²) | Reißdehnung (%) | Druckverformungsrest(%) |
|---|---|---|---|---|
| 100 / 0 | 77 | 16.2 | 288 | 33.5 |
| 90 / 10 | 71 | 13.6 | 285 | 28.8 |
| 80 / 20 | 66 | 11.7 | 286 | 26.9 |
| 70 / 30 | 60 | 9.3 | 275 | 23.3 |
| 60 / 40 | 55 | 8.0 | 274 | 22.5 |
| 50 / 50 | 51 | 6.4 | 263 | 20.9 |
| 30 / 70 | 43 | 4.3 | 241 | 17.8 |
| 10 / 90 | 35 | 3.0 | 223 | 15.9 |
| 0 / 100 | 32 | 2.4 | 203 | 14.2 |

### Vergleichsbeispiel 1:

Auf der Basis von Vinylchlorid-Homopolymerisaten wurden je eine hart eingestellte und eine weich eingestellte Rezeptur analog Beispiel 1 gemischt und granuliert.

### Hartrezeptur:

56.3 Gew% PVC mit K-Wert 70
25.3 Gew% Di-iso-decyl-phthalat
16.8 Gew% Kreide
1.6 Gew% Bleistabilisator

### Weichrezeptur:

43.0 Gew% PVC mit K-Wert 70
43.0 Gew% Di-iso-decyl-phthalat
12.8 Gew% Kreide
1.2 Gew% Bleistabilisator

### Herstellung und Testung der PVC-Harzmassen:

Die Hart- und Weichgranulate wurden in den in Tabelle 2 angegebenen Gewichtsverhältnissen mit einem einfachen Mischaggregat (Betonmischer) kurz gemischt. Die Prüfkörper wurden aus den Gemischen, analog Beispiel 1, durch 5-minütiges Walzen bei 160°C und anschließendem 10-minütigen Pressen bei 170°C hergestellt. An diesen Prüfkörpern wurden die Shore-Härte nach DIN 53505 und die Reißfestigkeit und Reißdehnung nach DIN 53504 gemessen. Die Meßergebnisse sind in Tabelle 2 zusammengefaßt.

**TABELLE 2**

| Hart-/Weichgranulat(Gew%) | Shore A | Reißfestigkeit(N/mm²) | Reißdehnung (%) |
|---|---|---|---|
| 100 / 0 | 92 | 14.0 | 173 |
| 90 / 10 | 89 | 12.8 | 176 |
| 80 / 20 | 87 | 11.6 | 170 |
| 60 / 40 | 80 | 9.3 | 173 |
| 50 / 50 | 77 | 7.6 | 149 |

Die aus den Granulaten auf der Basis von VC-Homopolymerisaten hergestellten Prüfkörper zeigten durchweg eine minderwertige Oberflächenbeschaffenheit, die auf eine unzureichende Verteilung des Hart- und Weichgranulats schließen läßt. Bestätigt wurde dies durch eine Gegenüberstellung der Werte für die Reißfestigkeit bzw. Reißdehnung von Prüfkörpern hergestellt aus einer Mischung von PVC-Hart- bzw. Weichgranulat und Prüfkörpern hergestellt aus einem Granulat mit entsprechendem Weichmachergehalt. Während die Prüfkörper aus der PVC-Granulat-Mischung nur eine Reißfestigkeit von 7.6 N/mm² und eine Reißdehnung von nur 149 % aufwiesen, zeigten die Prüfkörper aus PVC-Granulat mit einem, dem der Mischung entsprechenden, Weichmachergehalt eine Reißfestigkeit von 10.6 N/mm² und eine Reißdehnung von 223 %. Dieser Vergleich belegt die mangelnde Homogenität von Formkörpern auf der Basis von Mischungen von Vinylchlorid-Homopolymerisat-Granulaten.

## Patentansprüche

1. Verfahren zur Herstellung von Vinylchlorid-Polymerisat-Massen mit stufenlos einstellbaren Stoffeigenschaften durch Abmischen von 0.5 bis 99.5 Gew% weichmacherfreiem oder nur geringe Anteile Weichmacher enthaltendem Vinylchlorid-Pfropfcopolymerisat-Granulat hoher Shore-Härte A mit 99.5 bis 0.5 Gew% weichmacherhaltigem Vinylchlorid-Pfropfcopolymerisat-Granulat niederer Shore-Härte A, jeweils bezogen auf das Gesamtgewicht der Granulat-Mischung, und anschließender thermoplastischer Verarbeitung der Granulatmischungen, wobei
a) das weichmacherfreie oder nur geringe Anteile Weichmacher enthaltende Vinylchlorid-Pfropfcopolymerisat-Granulat ein elastomerhaltiges Vinylchloridpfropfcopolymerisat und 0 bis 10 Gew% Weichmacher, bezogen auf das Gesamtgewicht des Granulats, enthält und die Shore-Härte A des Granulats 60 bis 95 beträgt, und
b) das weichmacherhaltige Vinylchlorid-Pfropfcopolymerisat-Granulat ein elastomerhaltiges Vinylchloridpfropfcopolymerisat und 1 bis 50 Gew% Weichmacher, bezogen auf das Gesamtgewicht des Granulats, enthält und die Shore-Härte A des Granulats 15 bis 60 beträgt.

2. Verfahren nach Anspruch 1, dadurch gekennzeichnet, daß die Shore-Härte Shore A des VC-Pfropfcopolymerisat-Granulats a) 70 bis 85 und die Shore-Härte Shore A des VC-Pfropfcopolymerisat-Granulats b) 30 bis 40 beträgt.

3. Verfahren nach Anspruch 1 und 2, dadurch gekennzeichnet, daß als VC-Pfropfcopolymerisate solche mit einem Vinylchlorid-Anteil von 30 bis 95 Gew%, bezogen auf das Gesamtgewicht des Pfropfcopolymerisats, und einer Ethylen-Vinylacetat-Pfropfgrundlage, deren Ethylengehalt 30 bis 65 Gew%, bezogen auf das Gesamtgewicht der Pfropfgrundlage, beträgt, oder mit einer, gegebenenfalls vernetzten, Polybutylacrylat-Pfropfgrundlage verwendet werden.

4. Verfahren nach Anspruch 1 bis 3, dadurch gekennzeichnet, daß das Granulat a) keinen Weichmacher enthält.

5. Verfahren nach Anspruch 1 bis 4, dadurch gekennzeichnet, daß das Granulat b) 20 bis 30 Gew% Weichmacher, bezogen auf das Gesamtgewicht des Granulats, enthält.

6. Verfahren nach Anspruch 1 bis 5, dadurch gekennzeichnet, daß die Korngröße der Granulate 1.0 bis 10.0 mm beträgt.

7. Verfahren nach Anspruch 1 bis 6, dadurch gekennzeichnet, daß die Mischung der VC-Pfropfcopolymerisat-Granulate in einfachen Mischaggregaten wie Trommelmischern oder durch direkte Dosierung der Granulate im gewünschten Mischungsverhältnis in die Verarbeitungsanlage erfolgt.

8. Verfahren nach Anspruch 1 bis 7, dadurch gekennzeichnet, daß die Mischung der VC-Pfropfcopolymerisat-Granulate mit den in der PVC-Technologie gebräuchlichen thermoplastischen Verarbeitungstechnologien, durch Extrusion zu Rohren oder Profilen, durch Kalandrierung zu Folien oder durch Spritzguß zu Formkörpern, weiterverarbeitet wird.

## Claims

1. Process for the preparation of vinyl chloride polymer compositions having continuously adjustable material properties by blending from 0.5 to 99.5 % by weight of vinyl chloride graft copolymer granules of high Shore A hardness which contain only small amounts of plasticizer, or none at all, with from 99.5 to 0.5 % by weight of plasticizer-containing vinyl chloride graft copolymer granules of low Shore A hardness, in each case based on the total weight of the granule mixture, and subsequently subjecting the granule mixtures to thermoplastic processing, where
a) the vinyl chloride graft copolymer granules containing only a small amount of plasticizer, or none at all, contains an elastomer-containing vinyl chloride graft copolymer and from 0 to 10 % by weight of plasticizer based on the total weight of the granules, and the Shore A hardness of the granules is from 60 to 95, and
b) the plasticizer-containing vinyl chloride graft copolymer granules contain an elastomer-containing vinyl chloride graft copolymer and from 1 to 50 % by weight of plasticizer based on the total weight of the granules, and the Shore A hardness of the granules is from 15 to 60.

2. Process according to Claim 1, characterized in that the Shore A hardness of the VC graft copolymer granules a) is from 70 to 85 and the Shore A hardness of the VC graft copolymer granules b) is from 30 to 40.

3. Process according to Claim 1 and 2, characterized in that the VC graft copolymers used are those having a vinyl chloride content of from 30 to 95 % by weight, based on the total weight of the graft copolymer, and an ethylene vinyl acetate graft base whose ethylene content is from 30 to 65 % by weight, based on the total weight of the graft base, or having an optionally crosslinked polybutyl acrylate graft base.

4. Process according to Claim 1 to 3, characterized in that the granules a) contain no plasticizer.

5. Process according to Claim 1 to 4, characterized in that the granules b) contain from 20 to 30% by weight of plasticizer, based on the total weight of the granules.

6. Process according to Claim 1 to 5, characterized in that the particle size of the granules is from 1.0 to 10.0 mm.

7. Process according to Claim 1 to 6, characterized in that the mixing of the VC graft copolymer granules is carried out in simple mixing units, such as drum mixers, or by direct metering of the granules into the processing equipment in the desired mixing ratio.

8. Process according to Claim 1 to 7, characterized in that the mixture of the VC graft copolymer granules is further processed by the thermoplastic processing technologies customary in PVC technology, by extrusion to give pipes or profiles, by calendering to give films or by injection moulding.

## Revendications

1. Procédé pour fabriquer des masses d'un polymère de chlorure de vinyle, présentant des propriétés mécaniques ajustables en continu par mélange de 0,5 à 99,5 % en poids d'un granulé d'un copolymère greffé de chlorure de vinyle à grande dureté Shore A, ne contenant pas de plastifiant, ne contenant que de faibles quantités de plastifiants, avec 99,5 à 0,5 % en poids d'un granulé d'un copolymère greffé de chlorure de vinyle ayant une dureté Shore A plus faible, contenant un plastifiant, les pourcentages étant rapportés au poids total du mélange de granulés, puis transformation thermoplastique des mélanges de granulés, procédé dans lequel :
a) le granulé d'un copolymère greffé de chlorure de vinyle ne contenant pas de plastifiant ou ne contenant que de faibles quantités de plastifiants, contient un copolymère greffé de chlorure de vinyle et contenant un élastomère, et de 0 à 10 % en poids d'un plastifiant, par rapport au poids total du granulé, et la dureté Shore A du granulé est de 60 à 95, et
b) le granulé de copolymère greffé de chlorure de vinyle contenant un plastifiant contient un copolymère greffé de chlorure de vinyle contenant un élastomère, et de 1 à 50 % en poids d'un plastifiant, par rapport au poids total du granulé, et la dureté Shore A du granulé est de 15 à 60.

2. Procédé selon la revendication 1, caractérisé en ce que la dureté Shore A du granulé a) du copolymère greffé de VC est de 70 à 85 et que la dureté Shore A du granulé b) du copolymère greffé de VC est de 30 à 40.

3. Procédé selon la revendication 1 ou 2, caractérisé en ce qu'on utilise comme copolymères greffés de VC ceux qui ont une teneur en chlorure de vinyle, de 30 à 95 % en poids par rapport au poids total du copolymère greffé, et qui possèdent une base de greffage éthylène-acétate de vinyle, dont la teneur en éthylène est de 30 à 65 % en poids par rapport au poids total de la base de greffage, ou comportant une base de greffage de poly(acrylate de butyle), éventuellement réticulée.

4. Procédé selon les revendications 2 à 3, caractérisé en ce que le granulé a) ne contient pas de plastifiant.

5. Procédé selon les revendications 1 à 4, caractérisé en ce que le granulé b) contient de 20 à 30 % en poids d'un plastifiant par rapport au poids total du granulé.

6. Procédé selon les revendications 1 à 5, caractérisé en ce que la granulométrie des granulés est de 1,0 à 10,0 mm.

7. Procédé selon les revendications 1 à 6, caractérisé en ce que les mélanges des granulés de copolymère greffé de VC s'effectuent dans des équipements mélangeurs simples tels que des mélangeurs à tambour, ou encore par dosage direct des granulés, selon le rapport de mélange souhaité, dans l'installation de mise en oeuvre.

8. Procédé selon les revendications 1 à 7, caractérisé en ce que les mélanges des granulés de copolymère greffé de VC sont soumis à une post-transformation par des techniques de mise en oeuvre des thermoplastiques usuelles dans la technologie du PVC, par extrusion pour donner des tuyaux ou des profilés, par calandrage pour donner des feuilles, ou par moulage par compression pour donner des objets moulés.
